# EUROPÄISCHE PATENTSCHRIFT

(11) **EP 1 204 186 B1**
(45) Veröffentlichungstag und Bekanntmachung des Hinweises auf die Patenterteilung: **27.03.2013**
(21) Anmeldenummer: 01120224.9
(22) Anmeldetag: 23.08.2001
(51) Int. Cl.: H02J 7/00, B60K 28/14

(54) **Vorrichtung zur Spannungsversorgung für elektrische Verbraucher in einem Kraftfahrzeug**
Voltage supply apparatus for electrical loads in a motor vehicle
Dispositif pour l'alimentation de charges électriques dans une automobile

(30) Priorität: 22.09.2000 DE 10046989
(43) Veröffentlichungstag der Anmeldung: 08.05.2002
(73) Patentinhaber: ROBERT BOSCH GMBH, 70442 Stuttgart (DE)
(72) Erfinder: Schustek, Siegfried, 71254 Ditzingen (DE)

(56) Entgegenhaltungen:
- DE-A1- 3 327 532
- DE-A1- 4 028 242
- DE-C1- 4 211 578
- US-A- 5 327 990
- PATENT ABSTRACTS OF JAPAN vol. 008, no. 080 (M-289), 12 April 1984 (1984-04-12) & JP 58 224833 A (YAZAKI SOUGIYOU KK), 27 December 1983 (1983-12-27)

## Beschreibung

Die Erfindung betrifft eine Vorrichtung zur Spannungsversorgung für elektrische Verbraucher in einem Kraftfahrzeug, welche einen Generator und eine Batterie aufweist, wobei die Batterie mit dem Generator und mit den Verbrauchern verbunden ist.

### Stand der Technik

Die Spannungsversorgung in einem Kraftfahrzeug wird üblicherweise mit Hilfe eines Generators sichergestellt, der eine Batterie lädt. An diese Batterie sind elektrische Verbraucher des Bordnetzes angeschlossen, wobei gegebenenfalls zusätzliche Spannungswandler vorhanden sind, mit deren Hilfe eine Anpassung der Versorgungsspannung an die jeweiligen Erfordernisse durchgeführt wird.

Bei neuen Fahrzeugmodellen wird in zunehmendem Maß zur besseren Achslastverteilung und aus Platzgründen die Batterie aus dem Motorraum nach hinten in den Fahrgastraum, beispielsweise unter den Beifahrersitz oder unter die Rücksitzbank, oder in den Kofferraum verlegt. Das Hauptkabel führt häufig zu einem Plusstützpunkt im Motorraum mit großem Querschnitt. Von da aus werden die verschiedenen Verbraucher mit kleinen angepassten Kabelquerschnitten angefahren. Im Falle eines Unfalles stellen alle großen Kabelquerschnitte, die ständig unter Spannung stehen, ein Sicherheitsrisiko dar.

Um im Falle eines Unfalles der Brandgefahr zu begegnen, haben einige Fahrzeughersteller bereits eine sogenannte intelligente Batterieklemme eingeführt. Dabei wird bei hohen Verzögerungswerten des Fahrzeugs die elektrische Verbindung zwischen dem Pluspol der Batterie und den Verbrauchern aufgetrennt. Während des normalen Betriebes steht jedoch die Spannung an allen ein- und ausschaltbaren Verbrauchern ständig an.

Aus der DE-A-4028242 ist ein Zwei-Batterien-System bekannt. Bei einem Bordnetz für Kraftfahrzeuge mit einem Generator, einem Starter, einer Starterbatterie und einer Bordnetzbatterie zur Versorgung von Bordnetzverbrauchern ist die Verbindung zwischen Starterbatterie und Bordnetzbatterie unabhängig vom Fahrzustand auftrennbar, wenn andernfalls die Bordnetzbatterie aus der Starterbatterie aufgeladen werden würde.

### Vorteile der Erfindung

Die erfindungsgemäße Vorrichtung zur Spannungsversorgung für elektrische Verbraucher in einem Kraftfahrzeug hat den Vorteil, daß gegenüber einer intelligenten Batterieklemme, die lediglich als Notausschaltmittel für alle Verbraucher dient, Notrufsender, Autoradio, Navigationssystem, Beleuchtung der Fahrgastzelle oder Handy ohne notwendige zusätzliche Leitungen zur Batterie aus dem Kraftfahrzeug-Bordnetz betrieben werden können. Die Zuleitungen zum Starter, zur Scheibenheizung, zur Sitzheizung, zur Lenkradheizung oder zu den Scheinwerfern und vorzugsweise auch die Zuleitung zum Generator, lassen sich im Falle eines Unfalles, vorzugsweise durch ein von einem im Plusstützpunkt angeordneten Verzögerungssensor ausgelösten Signal von der Batteriezuleitung trennen.

Gegenüber einer intelligenten Batterieklemme mit einzeln zuschaltbaren Verbrauchern ist bei der beanspruchten Vorrichtung der Leitungskupferaufwand bedingt durch geringere Kabellängen vom Plusstützpunkt aus an die Verbraucher geringer.

Bei normalem Betrieb lassen sich die genannten Hochstromverbraucher unter Verwendung von im Plusstützpunkt vorgesehenen Schaltelementen einzeln beeinflussen. Die Zuleitungen zu diesen Hochstromverbrauchern sind im passiven Zustand stromlos.

### Zeichnung

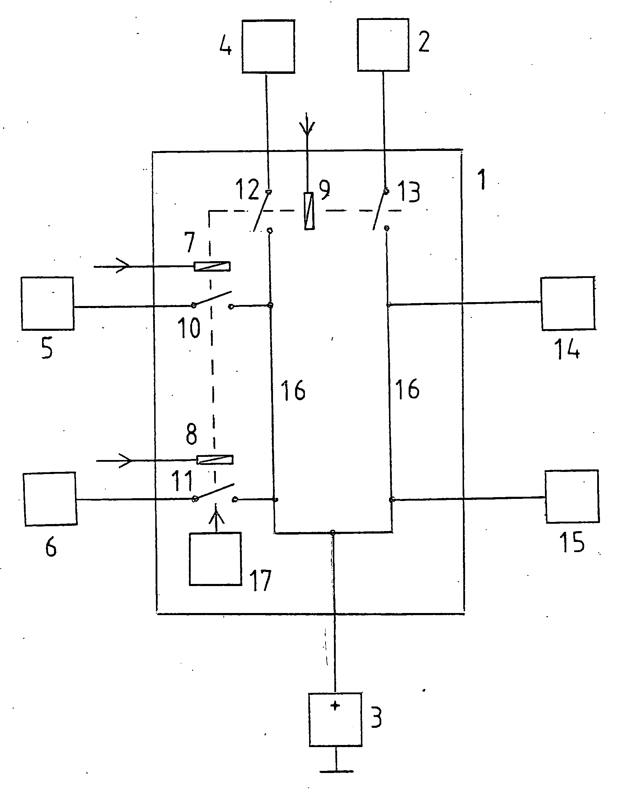

Die Erfindung wird in der Figur dargestellt und in der nachfolgenden Beschreibung näher erläutert. In der Figur ist ein Blockschaltbild gezeigt, aus welchem die zum Verständnis der Erfindung wesentlichen Bestandteile einer Vorrichtung zur Spannungsversorgung für elektrische Verbraucher in einem Kraftfahrzeug ersichtlich sind.

### Beschreibung

In der Figur ist eine Vorrichtung zur Spannungsversorgung für elektrische Verbraucher in einem Kraftfahrzeug gezeigt. Diese Vorrichtung weist einen Generator 2, beispielsweise einen Drehstromgenerator, und eine Batterie 3 auf. Zwischen dem Generator 2 und dem Pluspol der Batterie 3 ist ein Plusstützpunkt 1 vorgesehen.

Dieser Plusstützpunkt 1 ist über eine einzige gemeinsame Versorgungsleitung 16 mit dem Pluspol der Batterie 3 verbunden. Weiterhin steht der Plusstützpunkt 1 mit einer Vielzahl von Verbrauchern in Verbindung. Zu diesen Verbrauchern gehören Hochstromverbraucher 4,5,6 des Kraftfahrzeugs, die Starter, die Scheibenheizung, die Sitzheizung, die Lenkradheizung oder die Scheinwerfer sind. Weiterhin gehören zu den Verbrauchern auch Kleinverbraucher 14,15 des Kraftfahrzeugs, die ein Autoradio, ein Navigationssystem, die Beleuchtung der Fahrgastzelle, ein Notrufsender oder ein im Kraftfahrzeug vorgesehenes Handy sind.

Die Hochstromverbraucher 4,5,6 sind jeweils über ein Schaltelement 10,11,12 an die innerhalb des Plusstützpunktes 1 geführte Versorgungsleitung 16 angeschlossen. Bei diesen Schaltelementen kann es sich um mechanische Schaltkontakte handeln, die jeweils unter Verwendung eines Relais 7,8,9 betätigt werden, um elektromotorische Schalter oder um elektronische Schalter.

Die genannten Schaltelemente 10,11,12 sind sowohl einzeln als auch gruppenweise schaltbar. Eine Einzelbetätigung kann beispielsweise mittels am Armaturenbrett des Kraftfahrzeugs vorgesehener Bedienschalter erfolgen. Ein gruppenweises Ausschalten der genannten Schaltelemente ist als Reaktion auf das Ausgangssignal eines Crashsensors 17 möglich. Dieser Crashsensor 17 ist ebenfalls innerhalb des Plusstützpunktes angeordnet. Werden mittels dieses Crashsensors hohe Beschleunigungskräfte erfaßt, die durch einen Frontalzusammenstoß, einen Auffahrunfall, einen Seitenaufprall oder einen Überschlag hervorgerufen werden, dann erfolgt durch das Ausgangssignal des Crashsensors 17 eine Öffnung der Schalter 10,11,12 zur Unterbrechung der zu den Hochstromverbrauchern 4,5,6 führenden Versorgungsleitungen. Auch der zwischen dem Generator 2 und der Batterie 3 im Plusstützpunkt 1 in der Versorgungsleitung 16 liegende Schalter 13 wird durch das genannte Ausgangssignal des Crashsensors 17 geöffnet. Dadurch wird nach einem Unfall die Brandgefahr im Kraftfahrzeug durch eine Unterbrechung der zu den Hochstromverbrauchern 4, 5, 6 und der zum Generator 2 führenden Versorgungsleitungen reduziert.

Die Kleinverbraucher 14, 15 sind innerhalb des Plusstützpunkts 1 direkt an die Versorgungsleitung 16 angeschlossen. Dies hat den Vorteil, daß beispielsweise nach einem Unfall mittels des Handys oder eines anderen Notrufsenders ein automatisch generierter Notruf ausgesendet werden kann, in welchem Daten enthalten sind, die vom Navigationssystem des Kraftfahrzeugs abgeleitet sind und exakte Informationen über den momentanen Standort des Fahrzeugs enthalten.

Der in der Figur gezeigte Plusstützpunkt 1 weist vorzugsweise ein Gehäuse auf, innerhalb dessen die dargestellten Schaltelemente 10,11,12,13 und der Crashsensor 17 angeordnet sind.

Die Positionierung des Plusstützpunktes 1 innerhalb des Kraftfahrzeugs kann verbrauchernah gewählt werden. Dies hat den Vorteil, daß vom Plusstützpunkt 1 aus lediglich vergleichsweise kurze Kabel beziehungsweise Leitungen zu den jeweiligen Verbrauchern geführt werden müssen, so daß insgesamt Leitungskupfer eingespart wird. Durch die beschriebene Anordnung der Schaltelemente im Plusstützpunkt ist sichergestellt, daß im Falle eines Unfalles die genannten Hochstromverbraucher schnell und zeitgleich von der Batteriezuleitung getrennt beziehungsweise stromlos geschaltet werden. die genannten Kleinverbraucher, können ohne zusätzliche Leitungen aus der Batterie aus dem Kfz-Bordnetz betrieben werden. Weiterhin sind die Hochstromverbraucher einzeln zu- und abschaltbar. Um die Funktionsweise der Gesamtvorrichtung sicherzustellen, muß darauf geachtet werden, daß die Verbindungsleitung zwischen dem Pluspol der Batterie 3 und dem Plusstützpunkt 1 ausreichend sicher gegen Masseschluß positioniert ist.

## Patentansprüche

1. Vorrichtung zur Spannungsversorgung für elektrische Verbraucher in einem Kraftfahrzeug, welche einen Generator wobei die Kleimverbraucher (14, 15) Notrufsender Autoradio, Navigationsystem, Beleuchtung der Fagrgastzelle oder Handy sind und eine Batterie aufweist, wobei die Batterie mit dem Generator und mit den Verbrauchern verbunden ist, wobei sowohl die Verbraucher als auch der Generator mit einem gemeinsamen Plusstützpunkt (1) verbunden sind, wobei der pluspol der Batterie (3) mit einer gemeinsamen, innerhalb des Plusstützpunktes geführten Versorgungsleitung (16) verbunden ist, wobei zu den Verbrauchern Hochstromverbraucher (4,5,6) gehören, die jeweils über ein eigenes, innerhalb des Plusstützpunktes (1) vorgesehenes Schaltelement (10,11,12) mit der gemeinsamen Versorgungsleitung (16) verbunden sind wobei die Hochstromverbraucher (4,5,6) Starter, Scheibenheizung Sitzheizung, Lenkradheizung oder Scheinwerfer sind wobei zu den Verbrauchern Kleinverbraucher (14,15 gehören, die im Plusstützpunkt (1) jeweils direkt mit der gemeinsamen Versorgungsleitung (16) verbunden sind, wobei die Kleimverbrancher (14,15) Notrufsender Autoradio, Navigationsystem, Beleuchtung der Fagrgustzelle oder Handy

2. Vorrichtung nach Ansprüch 1 **dadurch gekennzeichnet, dass** den Hochstromverbrauchern (4,5,6) jeweils ein Schaltrelais (7,8,9) zugeordnet ist, durch dessen Ansteuerung die Schaltelemente (10,11,12) im Versorgungsweg der Hochstromverbraucher einzeln oder gruppenweise ein- und ausschaltbar sind.

3. Vorrichtung nach Anspruch 2, **dadurch gekennzeichnet, dass** die Ansteuerung der Relais (7,8,9) durch Betätigung manueller Schalter erfolgt.

4. Vorrichtung nach Anspruch 2 oder 3, **dadurch gekennzeichnet, dass** der Plusstützpunkt (1) einen integrierten Crashsensor (17) aufweist, der beim Erkennen hoher Beschleunigungen die den Hochstromverbrauchern zugeordneten Relais bzw. Schaltelemente derart ansteuert, dass die Spannungsversorgung der Hochstromverbraucher unterbrochen wird.

5. Vorrichtung nach einem der vorhergehenden Ansprüche, **dadurch gekennzeichnet, dass** der Generator (2) über ein im Plusstützpunkt(1) vorgesehenes Schaltelement (13) mit der gemeinsamen Versorgungsleitung (16) verbunden ist.

6. Vorrichtung nach Anspruch 5, **dadurch gekennzeichnet, dass** das dem Generator (2) zugeordnete Schaltelement (13) durch das vom Crashsensor (17) ausgegebene Steuersignal zur Abtrennung des Generators (2) vom Pluspol der Batterie (3) ansteuerbar ist.

## Claims

1. Voltage supply apparatus for electrical loads in a motor vehicle, which apparatus has a generator (2) and a battery, wherein the battery is connected to the generator and to the loads, wherein both the loads and the generator are connected to a common positive support point (1), wherein the positive pole of the battery (3) is connected to a common supply line (16) which is routed within the positive support point, wherein the loads include high-current loads (4, 5, 6) which are each connected to the common supply line (16) by means of their own switching element (10, 11, 12) which is provided within the positive support point (1), wherein the high-current loads (4, 5, 6) are a starter, windscreen heater, seat heater, steering wheel heater or headlights, wherein the loads include small loads (14, 15) which are each directly connected to the common supply line (16) in the positive support point (1), wherein the small loads (14, 15) are an emergency transmitter, car radio, navigation system, lighting system for the passenger compartment or mobile telephone.

2. Apparatus according to Claim 1, **characterized in that** the high-current loads (4, 5, 6) each have an associated switching relay (7, 8, 9) which, when it is actuated, can switch on or switch off the switching elements (10, 11, 12) in the supply path of the high-current loads individually or in groups.

3. Apparatus according to Claim 2, **characterized in that** the relays (7, 8, 9) are actuated by operating manual switches.

4. Apparatus according to Claim 2 or 3, **characterized in that** the positive support point (1) has an integrated crash sensor (17) which, when high accelerations are identified, actuates the relays or switching elements which are associated with the high-current loads in such a way that the supply of voltage to the high-current loads is interrupted.

5. Apparatus according to one of the preceding claims, **characterized in that** the generator (2) is connected to the common supply line (16) by means of a switching element (13) which is provided in the positive support point (1).

6. Apparatus according to Claim 5, **characterized in that** the switching element (13) which is associated with the generator (2) can be actuated by the control signal, which is emitted by the crash sensor (17), for disconnecting the generator (2) from the positive pole of the battery (3).

## Revendications

1. Dispositif d'alimentation électrique pour des appareillages électriques dans un véhicule automobile, lequel présente un générateur (2) et une batterie, la batterie étant reliée avec le générateur et les appareillages, les appareillage et le générateur étant tous reliés avec un point fixe positif (1) commun, le pôle positif de la batterie (3) étant relié avec une ligne d'alimentation (16) commune amenée à l'intérieur du point fixe positif, des appareillages à courant fort (4, 5, 6) faisant partie des appareillages, lesquels sont respectivement reliés avec la ligne d'alimentation (16) commune par un élément de commutation (10, 11, 12) propre prévu à l'intérieur du point fixe positif (1), les appareillages à courant fort (4, 5, 6) étant le démarreur, le dégivrage des vitres, le chauffage des sièges, le chauffage du volant de direction ou les feux de route, des appareillages à faible consommation (14, 15) faisant partie des appareillages, lesquels sont respectivement reliés directement avec la ligne d'alimentation (16) commune dans le point fixe positif (1), les appareillages à faible consommation (14, 15) étant un émetteur d'appel d'urgence, un autoradio, un système de navigation, un éclairage de l'habitacle ou un téléphone portable.

2. Dispositif selon la revendication 1, **caractérisé en ce qu'**aux appareillages à courant fort (4, 5, 6) est respectivement associé un relais de commutation (7, 8, 9) par l'excitation duquel les éléments de commutation (10, 11, 12) peuvent être mis en ou hors circuit individuellement ou de manière groupée dans le trajet d'alimentation des appareillages à courant fort.

3. Dispositif selon la revendication 2, **caractérisé en ce que** l'excitation des relais (7, 8, 9) s'effectue en actionnant des commutateurs manuels.

4. Dispositif selon la revendication 2 ou 3, **caractérisé en ce que** le point fixe positif (1) présente un détecteur de collision (17) intégré qui, en cas de détection d'accélérations élevées, excite les relais ou les éléments de commutation associés aux appareillages à courant fort de telle sorte que l'alimentation électrique des appareillages à courant fort est interrompue.

5. Dispositif selon l'une des revendications précédentes, **caractérisé en ce que** le générateur (2) est relié avec la ligne d'alimentation (16) commune par le biais d'un élément de commutation (13) prévu dans le point fixe positif (1).

6. Dispositif selon la revendication 5, **caractérisé en ce que** l'élément de commutation (13) associé au générateur (2) peut être excité par le signal de commande délivré par le détecteur de collision (17) pour déconnecter le générateur (2) du pôle positif de la batterie (3).
